# EUROPÄISCHE PATENTSCHRIFT

(11) **EP 2 478 050 B1**
(45) Veröffentlichungstag und Bekanntmachung des Hinweises auf die Patenterteilung: **24.01.2018**
(21) Anmeldenummer: 10771373.7
(22) Anmeldetag: 07.09.2010
(51) Int. Cl.: B32B 5/02, B32B 5/18, B32B 5/22, B32B 5/24, B32B 5/32, B32B 7/08, B32B 7/12, C08J 9/36, C08J 9/42, C08G 101/00, C08L 7/00, C08L 21/00, C08L 67/00, C08L 75/00

(54) **MIT SUPERABSORBER AUSGERÜSTETE OFFENZELLIGE SCHÄUME**
OPEN-CELL FOAMS EQUIPPED WITH SUPERABSORBERS
MOUSSE A ALVEOLES OUVERTES EQUIPPEES DE SUPERABSORBANTS

(30) Priorität: 18.09.2009 EP 09170642
(43) Veröffentlichungstag der Anmeldung: 25.07.2012
(73) Patentinhaber: BASF SE, 67056 Ludwigshafen am Rhein (DE)
(72) Erfinder: RUDOLF, Peter, 68526 Ladenburg (DE)
(74) Vertreter: BASF IP Association
(86) Internationale Anmeldenummer: PCT/EP2010/063094
(87) Internationale Veröffentlichungsnummer: WO 2011/032862

(56) Entgegenhaltungen:
- WO-A1-2006/066752
- WO-A2-2009/062902
- DE-A1- 4 328 190
- US-A- 5 336 695

## Beschreibung

Die vorliegende Erfindung betrifft Verfahren zur Herstellung von mit Superabsorber ausgerüsteten offenzelligen Schäumen, mit Superabsorber ausgerüstete offenzellige Schäume sowie deren Verwendung zur Feuchtigkeitsregulierung.

Superabsorber sind bekannt. Für derartige Materialien sind auch Bezeichnungen wie "hochquellfähiges Polymer" "Hydrogel" (oft auch für die trockene Form verwendet), "Hydrogel bildendes Polymer", "Wasser absorbierendes Polymer", "absorbierendes gelbildendes Material", "quellfähiges Harz", "wasserabsorbierendes Harz" oder ähnliche gebräuchlich. Es handelt sich dabei um vernetzte hydrophile Polymere, insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboximethylcellulose, teilweise vernetztes Polyalkylenoxid oder in wässrigen Flüssigkeiten quellbare Naturprodukte, wie beispielsweise Guarderivate, wobei wasserabsorbierende Polymere auf Basis teilneutralisierter Acrylsäure am weitesten verbreitet sind. Die wesentlichen Eigenschaften von Superabsorbern sind ihre Fähigkeiten, ein Vielfaches ihres Eigengewichts an wässrigen Flüssigkeiten zu absorbieren und die Flüssigkeit auch unter gewissem Druck nicht wieder abzugeben. Der trockene Superabsorber wandelt sich bei Flüssigkeitsaufnahme in ein Gel, bei der üblichen Wasseraufnahme entsprechend in ein Hydrogel um. Die Vernetzung ist für synthetische Superabsorber wesentlich und ein wichtiger Unterschied zu üblichen reinen Verdickern, da sie zur Unlöslichkeit der Polymeren in Wasser führt. Lösliche Substanzen wären als Superabsorber nicht brauchbar. Das mit weitem Abstand wichtigste Einsatzgebiet von Superabsorbern ist das Absorbieren von Körperflüssigkeiten. Superabsorber werden beispielsweise in Windeln für Kleinkinder, Inkontinenzprodukten für Erwachsene oder Damenhygieneprodukten verwendet. Andere Anwendungsgebiete sind beispielsweise die als Wasser zurückhaltende Mittel im landwirtschaftlichen Gartenbau, als Wasserspeicher zum Schutz vor Feuer, zur Flüssigkeitsabsorption in Lebensmittelverpackungen oder ganz allgemein zur Absorption von Feuchtigkeit. In Superabsorbervliesen ist der Superabsorber Bestandteil des Vlieses, er wird beispielsweise durch Polymerisation einer entsprechenden, auf das Vlies aufgebrachten Monomerlösung oder -suspension auf dem Vlies erzeugt oder als fertiger pulver- oder faserförmiger Superabsorber bei der Herstellung des Vlieses in dieses eingebracht.

Der Stand der Technik zu Superabsorbern wird beispielsweise in der Monographie "Modern Superabsorbent Polymer Technology", F.L. Buchholz und A.T. Graham, Wiley-VCH, 1998, Seiten 69 bis 117, zusammenfassend beschrieben.

WO 01/56 625 A2, EP 1 178 149 A1 und US 5,962,068 beschreiben Verfahren zur Herstellung Wasser absorbierender Verbundstoffe, bei denen Wasser absorbierende Polymere auf ein faseriges Trägermaterial, insbesondere auf Vliese aufpolymerisiert werden. Nach der Lehre von WO 02/094 328 A2 sind die Vliese doppelseitig mit Superabsorber versehen. WO 2006/106 096 A1 beschreibt Feuchtigkeit regulierende Verbundstoffe, die mindestens ein flächiges Trägermaterial, mindestens eine wasserlösliche hygroskopische Substanz und mindestens ein in Gegenwart der wasserlöslichen hygroskopischen Substanz auf das Trägermaterial aufpolymerisiertes wasserabsorbierendes Polymer enthalten. JP 05-105 705 A betrifft nichtzerfließende Trockenmittel, bestehend aus einem Trägermaterial und hygroskopischen Salzen, wobei die hygroskopischen Salze mittels Wasser absorbierender Polymere auf dem Trägermaterial fixiert werden. WO 2007/023 085 A1 lehrt Feuchtigkeit regulierende Verbundstoffe, die beim Kontakt mit relativ hohen Flüssigkeitsmengen (beispielsweise beim Verschütten von Flüssigkeit auf den Verbundstoff) keine unerwünschten Unebenheiten bilden. Die Feuchtigkeit regulierenden Verbundstoffe von WO 2007/023 086 A1 enthalten einen Weichmacher, um unerwünschte Steifigkeit zu vermeiden.

Die WO 00/64 311 A1 offenbart Verbundstoffe, bei denen Superabsorber auf ein Trägermaterial polymerisiert wurden. Das Trägermaterial ist ein Vlies oder ein offenporiger Kunststoffschaum, in diesem Fall vorzugsweise ein Polyurethanschaum. Die Verbundstoffe werden zur Feuchtigkeitsregulierung in Sitzpolstern verwendet.
WO 2004/067 826 A1 lehrt mehrschichtige textile Flächengebilde, insbesondere solche aus einseitig maschenbeschichteten Vliesstoffen, die Funktionsmittel wie zum Beispiel Superabsorber enthalten können und als Polsterstoff geeignet sind. Die
DE 40 01 207 A1, DE 40 34 920 A1, DE 41 27 337 A1, DE 42 06 895 A1,
DE 197 26 810 C1 und DE 198 09 156 A1 betreffen die Verwendung Feuchtigkeit regulierender Verbundstoffe in Sitzmöbeln, insbesondere in Kraftfahrzeugsitzen.

WO 2009/106 496 A1 und WO 2009/106 501 A1 lehren mehrschichtige Verbundmaterialien, die ein Flächengebilde und einen Superabsorber enthalten. Das Flächengebilde ist eine Folie, ein Schaumstoff oder vorzugsweise ein textiles Flächengebilde, insbesondere ein Gewebe oder Vlies. Insbesondere wenn das Flächengebilde ein textiles Flächengebilde ist, kann der Superabsorber auf das Flächengebilde aufpolymerisiert werden. DE 103 49 060 A1 beschreibt Wasser absorbierende Strukturen auf Basis von hydrophilen Latexschäumen. Eines der offenbarten Verfahren zur Herstellung solcher Strukturen ist das Aufpolymerisieren von Superabsorbern auf den Latexschaum.

Trotz des weit entwickelten Stands der Technik besteht weiterhin Bedarf an flächigen Gebilden, die Feuchtigkeit regulieren können. Diese sollen insbesondere durchlässig für Feuchtigkeit sein, die Fähigkeit zur Speicherung und Abgabe von Feuchtigkeit aufweisen, flexibel und dünn sein sowie geeignet als Bestandteil von Verbundstoffen.

Demgemäß wurde ein Verfahren zur Herstellung von Flächengebilden gefunden, umfassend einen offenzelligen Schaum und Superabsorber, die dadurch gekennzeichnet sind, dass sie höchstens 30 mm dick sind. Weiterhin wurden nach dem Verfahren erhältliche Flächengebilde sowie Anwendungen dieser Flächengebilde gefunden.

Die erfindungsgemäßen Flächengebilde sind im Allgemeinen höchstens 30 mm dick. Vorzugsweise sind sie höchstens 15 mm dick und in besonders bevorzugter Form sind sie höchstens 5 mm dick. Die Mindestdicke ist allein von der notwendigen mechanischen Stabilität des Schaums bestimmt und wird entsprechend gewählt. Im Allgemeinen genügt eine Dicke von mindestens 0,5 mm, vorzugsweise mindestens 1 mm.

Unter Flächengebilden wird im Zusammenhang mit dieser Erfindung wie üblich ein Formkörper verstanden, der sich in einer von drei Raumrichtungen eines kartesischen Koordinatensystems deutlich weniger erstreckt als in den beiden anderen Raumrichtungen. Unter "Dicke" wird im Zusammenhang mit dieser Erfindung diejenige dieser Raumrichtungen verstanden, in die sich das Flächengebilde am wenigsten erstreckt. In einfachen Worten: Flächengebilde sind länger und breiter als dick. Beispiele für typische Flächengebilde im Rahmen dieser Erfindung sind Schaumbahnen, wie sie beispielsweise als Rollenware oder als Zuschnitte gehandelt werden, sowie Abschnitte davon.

Basis des erfindungsgemäßen Flächengebildes ist ein offenzelliger Schaum. Grundsätzlich ist jeder Schaum geeignet. Bevorzugt sind Polyurethanschäume, Polyesterschäume, synthetische oder natürliche Latexschäume. Derartige Schäume und ihre Herstellung sind bekannt. Diese Schäume sind auch in Form von Rollenware oder zuschnitten gängige Handelswaren.

Ein im Rahmen dieser Erfindung geeigneter Schaum hat im Allgemeinen eine Dichte von mindestens 10 kg/m³, vorzugsweise von mindestens 15 kg/m³ und in besonders bevorzugter Form von mindestens 20 kg/cm³ sowie im Allgemeinen von höchstens 150 kg/m³, vorzugsweise von höchstens 120 kg/m³ und in besonders bevorzugter Form von höchstens 100 kg/m³.

Das erfindungsgemäße Flächengebilde enthält auf dem als Trägermaterial verwendeten Schaum Superabsorber. Dieser wird beispielsweise durch Polymerisation einer entsprechenden, auf den Schaum aufgebrachten Monomerlösung oder -suspension auf dem Schaum erzeugt oder als fertiger pulver- oder faserförmiger Superabsorber bei der Herstellung des Schaums auf diesen aufgebracht. Dazu kann jeder bekannte Superabsorber verwendet werden.

Ein vergleichsweise einfaches Verfahren zur Herstellung der erfindungsgemäßen Flächengebilde umfasst die Schritte: i) Bereitstellen eines offenzelligen Schaums, ii) Aufbringen einer Mischung, die mindestens ein ethylenisch ungesättigtes, mindestens eine Säuregruppe tragendes Monomer enthält, auf den Schaum, und iii) Polymerisation der Mischung zum Superabsorber. Die Polymerisation einer auf den Schaum aufgebrachten Monomermischung führt typischerweise zu besonders fest haftenden und gleichmäßig verteilten Superabsorberpartikeln, sie ist zudem technisch vergleichsweise einfach und daher das bevorzugte Verfahren zur Herstellung von erfindungsgemäßen Flächengebilden.

Die in diesem Verfahren zur anschließenden Polymerisation auf den bereitgestellten Schaum aufgebrachte (beispielsweise aufgesprühte oder durch Tränkung aufgebrachte) Monomerlösung oder -suspension enthält typischerweise:
a) mindestens ein ethylenisch ungesättigtes, mindestens eine Säuregruppen tragendes Monomer, das wahlweise zumindest teilweise neutralisiert ist;
b) mindestens einen Vernetzer;
c) mindestens einen Initiator;
d) wahlweise ein oder mehrere mit den unter a) genannten Monomeren copolymerisierbare ethylenisch ungesättigte Monomere;
e) wahlweise ein oder mehrere wasserlösliche Polymere;
f) mindestens ein Lösungsmittel; und
g) wahlweise weitere Zusätze und/oder Hilfsstoffe.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Üblicherweise ist ein Teil des Monomers a) neutralisiert. Es ist zwar theoretisch möglich, das Monomer im unneutralisierten Zustand zu polymerisieren und anschließend das entstehende Polymergel zu neutralisieren, bei Strukturen wie den erfindungsgemäßen Flächengebilden ist eine ausreichend homogene Neutralisation auf dieser Stufe jedoch meist aufwendig und daher unwirtschaftlich. Vorzugsweise wird daher das Monomer teilneutralisiert. Dies geschieht üblicherweise durch Einmischung des Neutralisationsmittels als wässrige Lösung oder bevorzugt auch als Feststoff in das Monomer oder die Monomerlösung. Der Neutralisationsgrad des Monomeren beträgt im Allgemeinen mindestens 25 mol-%, vorzugsweise mindestens 50 mol-% und in besonders bevorzugter Weise mindestens 60 mol-% sowie im Allgemeinen höchstens 95 mol-%, bevorzugt höchstens 80 mol-%, und in besonders bevorzugter Weise höchstens 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Die Monomerlösung enthält als Stabilisator gegen eine unerwünscht frühe Polymerisation vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden. Dieser Stabilisator wird gelegentlich auch als "Polymerisationsinhibitor" bezeichnet, auch wenn damit lediglich eine Inhibierung einer unkontrollierten oder verfrühten Polymerisation bezweckt wird und keine Inhibierung der gewünschten Polymerisation zum Superabsorber.

Bevorzugte Hydrochinonhalbether sind Hydrochinonmonomethylether (MEHQ) und/oder alpha-Tocopherol (Vitamin E). Diese Stabilisatoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit und so in bequemer Weise die Stabilisierung des Monomers gegen Polymerisation erniedrigt werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat , Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt im Allgemeinen 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a).

Als Initiatoren c) können sämtliche unter den Polymerisationsbedingungen Radikale erzeugende Verbindungen eingesetzt werden, beispielsweise thermische Initiatoren, Redox-Initiatoren oder Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Oft werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich. Zur Herstellung von Superabsorbervliesen wird aber auch oft photopolymerisiert, in diesem Fall werden geeignete Photoinitiatoren verwendet. Zu bevorzugten Initiatoren zählen wasserlösliche Azoverbindungen wie 2,2'-Azobis(2-(2-imidazol-2-yl))propandihydrochlorid und 2,2'-Azobis(amidino)propan-dihydrochlorid, wasserlösliche Benzophenone wie 4-Benzoyl-N,N,N-trimethylbenzol-methanaminiumchlorid, 2-Hydroxy-3-(4-benzoylphenoxy)-3-N,N,N-trimethyl-1-propan-aminiumchloridmonohydrat, 2-Hydroxy-3-(3,4-dimethyl-9-oxo-9H-thioaxanthon-2-y-loxy)-N,N,N-trimethyl-1-propanaminiumchlorid, 2-Hydroxy-1-[4-(hydroxyethoxy)phenyl]-2-methyl-1-Propanon, 2-Hydroxy-2-methyl-1-phenylpropan-1-on und 4-Benzoyl-N,N-dimethyl-N-[2-(1-oxo-2-propenyl)oxy]ethylbenzolmethanaminiumchlorid. Eine besonders bevorzugte Initiatorenkombination enthält sowohl einen Azoinitiator als auch 2-Hydroxy-1-[4-(hydroxethoxy)phenyl]-2-methyl-1-Propanon.

Die Monomerlösung oder -suspension enthält eine ausreichende Menge eines oder mehrerer Initiatoren, um das in der Monomerlösung oder -suspension enthaltene Superabsorber bildende Monomer auszupolymerisieren. Typischerweise liegt die Initiatormenge im Bereich von 0,01 bis 5,0 und bevorzugterweise im Bereich von 0,2 bis 2,0 Gew.-%, bezogen auf das Gewicht des Monomers a).

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Die Monomerlösung enthält üblicherweise ein Lösungs- oder Suspensionsmittel f). Da meist mit Lösungen oder relativ geringe Anteile unlöslicher Komponenten enthaltenden Suspensionen (beispielsweise übersättigten Lösungen) gearbeitet wird, ist im folgenden der Einfachheit halber nur von Lösungen die Rede. Es kann jedes Lösungsmittel oder Lösungsmittelgemisch verwendet werden, mit dem eine zufrieden stellende Auftragung der Monomerlösung auf das Vlies möglich ist. Meist und in bevorzugter Weise wird Wasser verwendet. Der Wassergehalt der Monomerlösung beträgt im Allgemeinen mindestens 40 Gew.-%, vorzugsweise mindestens 45 Gew.-% und in besonders bevorzugter Weise mindestens 50 Gew.-% sowie im Allgemeinen höchstens 75 Gew.-%, bevorzugterweise höchstens 70 Gew.-% und in besonders bevorzugter Form höchstens 65 Gew.-%. Falls die Monomerlösung durch Besprühen auf das Vlies aufgebracht wird, wird die Wassermenge so eingestellt, dass eine gut versprühbare Lösung erhalten wird. Wahlweise kann dies auch durch Verwendung von Verdickern erreicht werden. Im allgemeinen wird eine Viskosität der Sprühlösung von mindestens 20 Centipoise, bevorzugt mindestens 30 Centipoise und in besonders bevorzugter Form von mindestens 40 Centipoise sowie im Allgemeinen höchstens 400 Centipoise, vorzugsweise höchstens 150 Centipoise und in besonders bevorzugter Form von höchstens 100 Centipoise, jeweils in einem Brookfield-Viskosimeter gemessen, eingestellt. Mit steigendem Wassergehalt steigt der Energieaufwand bei der anschließenden Trocknung und mit sinkendem Wassergehalt kann die Polymerisationswärme nur noch ungenügend abgeführt werden.

Die Monomerlösung enthält wahlweise weitere Zusätze oder Hilfsstoffe. Beispiele solcher Zusätze oder Hilfsstoffe sind hygroskopische Substanzen, insbesondere Natriumchlorid, wie etwa in WO 2006/106096 A1 oder JP 05/105705 A beschrieben, Weichmacher, wie in WO 2007/023085 A1 beschrieben, Verdicker oder als solche wirkende Stoffe, beispielsweise feinteilige partikulären Superabsorber, wie in WO 01/56625 A2 beschrieben.

Die Reihenfolge der Zugabe der Komponenten der Monomerlösung bei der Herstellung der Monomerlösung ist an sich nicht besonders wichtig, aus sicherheitstechnischen Gründen ist es jedoch bevorzugt, den Initiator zuletzt zuzusetzen.

Zur Herstellung eines erfindungsgemäßen Flächengebildes wird zunächst die Monomerlösung auf den als Trägermaterial verwendeten Schaum aufgebracht. Bequeme Methoden zur Aufbringung sind Aufsprühen oder Auftropfen der Monomerlösung auf den Schaum oder Tränken des Schaums mit Monomerlösung, bequemerweise durch Durchleiten einer Schaumbahn oder eines Schaumzuschnitts durch die Monomerlösung in einem Foulard oder vergleichbaren Apparat, mit dem die Aufbringung vorherbestimmter Mengen einer Flüssigkeit auf eine flächige Struktur möglich ist.

Die Monomerlösung wird typischerweise in solchen Mengen aufgebracht, dass ein Gehalt an fertigem Superabsorber nach abschließender Trocknung von im Allgemeinen mindestens 20 g/m², bevorzugterweise mindestens 40 g/m² und in besonders bevorzugter Form mindestens 40 g/m² sowie im Allgemeinen höchstens 700 g/m², bevorzugterweise höchstens 500 g/m² und in besonders bevorzugter Form höchstens 400 g/m² erreicht wird.

Vorzugsweise wird aufgesprüht. Das Sprühen kann mittels aller herkömmlichen Sprühvorrichtungen erfolgen, beispielsweise durch Düsen. Sowohl Einstoffdüsen als auch Zweistoffdüsen, in denen die Monomerlösung durch ein Gas zerstäubt wird, können verwendet werden. Als Gas kann Luft oder ein Inertgas wie Stickstoff, Argon oder Helium verwendet werden. Bevorzugt ist die Verwendung von Luft, Stickstoff oder eines Stickstoff- Luft-Gemisches. Die Verwendung eines Inertgases wie Stickstoff hat den Vorteil, die Entfernung von Sauerstoff aus der Monomerlösung zu fördern und so die polymerisationsinhibierende Wirkung von Stabilisatoren wie MEHQ herabzusetzen.

Nach dem Aufbringen der Monomerlösung auf den Schaum wird dieser Bedingungen unterworfen, bei denen die Monomere polymerisieren. Je nach in der Monomerlösung enthaltenem Initiator umfassen diese Bedingungen beispielsweise die Einwirkung von Hitze, ultravioletten Strahlen, Elektronenstrahlen oder deren Kombination auf den mit der Monomerlösung beaufschlagten Schaum. Die Polymerisation kann diskontinuierlich oder kontinuierlich durchgeführt werden, zum Beispiel indem der mit Monomerlösung beaufschlagte Schaum auf einem Förderband Bestrahlungs- oder Heizstrecken durchläuft.

Wird die Polymerisation thermisch initiiert, unterliegt die Reaktionsvorrichtung keinen besonderen Beschränkungen. Bei diskontinuierlich durchgeführten Polymerisationen kann die auf den Schaum aufgebrachte Monomerlösung in einem Ofen in Luft oder einer inerten Atmosphäre oder auch im Vakuum polymerisiert werden. Bei kontinuierlicher Durchführung durchläuft der Schaum einen Trockner, wie zum Beispiel einen Infrarottrockner, einen Durchlufttrockner oder dergleichen. Die Polymerisationstemperatur wird in Abhängigkeit von der Dicke des Schaums, der Monomerenkonzentration und der Art und Menge des in der Monomerlösung eingesetzten thermischen Initiators so gewählt, dass vollständige Polymerisation, abgesehen von der im Einzelfall tolerablen Restmonomerenkonzentration, erreicht wird. Die thermische Polymerisation erfolgt typischerweise in einem Temperaturbereich von 20°C bis 150°C und vorzugsweise von 40°C bis 100°C. Die Polymerisationszeit richtet sich nach der Polymerisationstemperatur, liegt aber typischerweise im Bereich von einigen Sekunden bis 2 Stunden und vorzugsweise im Bereich von einigen Sekunden bis 10 Minuten.

Bei Initiierung der Polymerisation mittel ultravioletter Strahlung wird in üblicher Weise unter Anwendung herkömmlicher UV-Lampen bestrahlt. Die Bestrahlungsbedingungen, wie die Bestrahlungsintensität und -Zeit, richten sich nach dem Typ des eingesetzten Schaums, der auf dem Schaum aufgetragenen Monomermenge, der Initiatormenge und -art und werden fachüblich gewählt. Typischerweise erfolgt die Bestrahlung unter Anwendung einer UV-Lampe mit einer Intensität im Bereich von 100 bis 700 Watt pro Zoll, vorzugsweise im Bereich von 400 bis 600 Watt pro Zoll, bei einem Abstand zwischen UV-Lampe und Schaum zwischen 2 bis 30 Zentimetern, über einen Zeitraum von 0,1 Sekunden bis 10 Minuten. Die Bestrahlung mit ultravioletten Strahlen kann im Vakuum, in Gegenwart eines inerten Gases, wie Stickstoff, Argon, Helium und dergleichen oder in Luft erfolgen. Die Bestrahlungstemperatur ist unkritisch, wobei die Bestrahlung des besprühten Schaums mit befriedigenden Ergebnissen meist bei Raumtemperatur durchgeführt werden kann.

Zur Initiierung der Polymerisation mittels Elektronenstrahlen eignet sich beispielsweise ein handelsübliches Elektronenstrahlbeschleunigungsgerät wie der Electrocurtain® C B 175 (Energy Sciences, Inc., Wilmington, USA). Im Bereich von 150 bis 300 Kilovolt arbeitende Beschleunigungsgeräte sind verwendbar. Der typischerweise im Bereich von 1 bis 10 Milliampere liegende Strahlstrom solcher Anlagen kann auf die gewünschte Dosis der ionisierenden Strahlung eingestellt werden. Die jeweilige Dosis ionisierender Strahlung variiert etwas und richtet sich nach Faktoren wie der An- oder Abwesenheit von vernetzend wirkenden Monomeren, dem gewünschten Polymerisationsgrad des Polymers, dem gewünschten Vernetzungsgrad und dergleichen. In der Regel ist es wünschenswert, den mit Monomerlösung beaufschlagten Schaum mit Dosen von etwa 1 bis 16 Megarad und vorzugsweise 2 bis 8 Megarad zu bestrahlen. Insbesondere bei Anwendung geringer Dosen ist es wünschenswert, die Monomerlösung von Sauerstoff zu befreien, zum Beispiel indem man vor Aufbringung auf den Schaum Stickstoff durch die Lösung perlt. Die Dosis wird vorzugsweise so gewählt, dass der Schaum nicht degeneriert.

Nach der Polymerisation wird das Flächengebilde üblicherweise getrocknet, beispielsweise durch Trocknen im Umluftofen, Durchlaufen eines Warmlufttrockners, Durchlaufen einer mit Infrarotlampen beleuchteten Strecke oder anderen geeigneten und bekannten Maßnahmen und Apparaten zum Trocknen von flächigen Bahnen. Es wird so lange getrocknet, bis der gewünschte Feuchtegehalt des Superabsorbers erreicht ist.

Der als Trägermaterial verwendete Schaum kann auf einer oder auf beiden Seiten mit zu polymerisierender Monomerlösung beaufschlagt und so auf einer oder beiden Seiten mit Superabsorber versehen werden.

Falls gewünscht, kann das Flächengebilde nachbehandelt werden. Beispiele möglichen Nachbehandlungen sind die Aufbringung von Weichmachern, Tenside, sonstigen Textilhilfsmitteln, die Einstellung eines gewünschten Feuchtegehalts oder die Oberflächennachvernetzung (oft auch nur "Nachvernetzung") der Superabsorberpartikel. Die Maßnahmen können auch kombiniert werden. Zusatzstoffe werden in üblicher Weise aufgebracht, etwa durch Tauchen des Flächengebildes in den Zusatzstoff, sofern dieser flüssig ist, oder eine Lösung davon und Abquetschen überschüssiger Flüssigkeit in einem Foulard, Besprühen mit einem flüssigen oder gelösten Zusatzstoff, Pinsel- oder Schwammauftrag und anschließende Trocknung in üblicher Weise.

Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben. Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetra-hydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben. Bevorzuge Nachvernetzer sind Ethylenkarbonat, Ethylenglykoldiglycidylether, Umsetzungsprodukte von Polyamiden mit Epichlorhydrin und Gemische aus Propylenglykol und 1,4-Butandiol. Ganz besonders bevorzugte Nachvernetzer sind 2-Hydroxyethyl-oxazolidin-2-on, Oxazolidin-2-on und 1,3-Propandiol. Weiterhin können auch Nachvernetzer eingesetzt werden, die zusätzliche polymerisierbare ethylenisch ungesättigte Gruppen enthalten, wie in DE 37 13 601 A1 beschrieben.

Falls nachvernetzt wird, beträgt die Menge an Nachvernetzer beträgt im Allgemeinen 0,001 bis 2 Gew.-%, bevorzugt 0,02 bis 1 Gew.-%, besonders bevorzugt 0,05 bis 0,2 Gew.-%, jeweils bezogen auf die Superabsorbermenge im Vlies.

In einer weiteren Ausführungsform der vorliegenden Erfindung werden vor, während oder nach der Nachvernetzung zusätzlich zu den Nachvernetzern oder als Nachvernetzer polyvalente Kationen auf die Partikeloberfläche aufgebracht. Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Nachvernetzung wird üblicherweise so durchgeführt, dass eine Lösung des Nachvernetzers auf das getrocknete Flächengebilde aufgesprüht wird. Im Anschluss an das Aufsprühen wird getrocknet, wobei die Nachvernetzungsreaktion sowohl vor als auch während der Trocknung stattfinden kann. Aufsprühen (prinzipiell ist auch Aufbringung durch Tränkung möglich) und Trocknung werden wie oben für die Polymerisation der Monomerlösung beschrieben durchgeführt.

Die Nachvernetzer werden typischerweise als wässrige Lösung eingesetzt. Über den Gehalt an nichtwässrigem Lösungsmittel bzw. Gesamtlösungsmittelmenge kann die Eindringtiefe des Nachvernetzers in die Superabsorberpartikel eingestellt werden. Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Das erfindungsgemäße Flächengebilde kann wahlweise mit einer oder mehr weiteren Schichten textiler oder nicht textiler Stoffe zu Feuchtigkeit regulierenden Verbundstoffen oder -textilien laminiert werden. Beispiele solcher weiteren Schichten sind Schäume, Polster, Vliese, Gewebe, Gestricke, Gewirke, Kunstleder oder andere flächige Kunststoffgebilde. Materialien für derartige weitere Schichten sind bekannt und werden je nach Einsatzzweck gewählt. Die Laminierung erfolgt auf übliche Weise. Zur Erzeugung der dabei gewünschten stoffschlüssigen Verbindung wird beispielsweise flächig oder mit einem Klebenetz verklebt oder durch Aufschmelzen, Verschweißen (etwa thermisch oder per Ultraschall) von Fasern verbunden. Es ist jedoch genauso möglich, die Schichten durch Vernähen oder Versteppen zu laminieren.

Unter "Verbundstoff" ist ein mehrlagiges Flächengebilde zu verstehen. Meist sind die Verbundstoffe zwei- oder dreilagig, wobei jedoch je nach Anwendungszweck oder gewünschten Eigenschaften auch weitere Lagen hinzukommen können. Aus wirtschaftlichen Gründen wird stets versucht werden, einen Verbundstoff mit den gewünschten Eigenschaften aus möglichst wenigen Lagen herzustellen. Verwendet werden derartige Verbundstoffe beispielsweise als Bezüge für Sitzmöbel oder Matratzen, als Sitzbezug, Dachhimmel, Fußmatten oder Innenauskleidung in Kraftfahrzeugen oder als sonstige textile Oberflächen.

Eine Lage des Verbundstoffs wird dabei von einem Oberstoff gebildet, der am Verwendungsort des Verbundstoffs dessen äußere, dem Betrachter oder Benutzer zugewandte Oberfläche bildet, und mindestens eine weitere Lage des Verbundstoffs wird von einem erfindungsgemäßen Flächengebilde gebildet. Das erfindungsgemäße Flächengebilde verleiht dem Verbundstoff Feuchtigkeit regulierende Eigenschaften.

Die erfindungsgemäßen Flächengebilde und Verbundstoffe eignen sich vorzüglich zur Feuchtigkeitsregulierung, insbesondere in Matratzen und Sitzpolstern, beispielsweise in Sitzmöbeln oder Autositzen sowie in sonstigen Innenraumverkleidungen oder Fußmatten. Insbesondere wurde festgestellt, dass die erfindungsgemäßen Flächengebilde und Verbundstoffe sich durch gute Nassbeständigkeit auszeichnen. Sie eignen sich deshalb auch zur Verwendung in konstant feuchter Umgebung, beispielsweise als Wundauflagen. Sie sind auch besonders gut waschbar und eignen sich zur Verwendung in Textilien wie Sicherheits- und Funktionskleidung oder auch in Schwamm- oder Wischtüchern.

Sitzpolster oder Matratzen, die die erfindungsgemäßen Flächengebilde oder Verbundstoffe enthalten, weisen erhöhten Sitz- oder Liegekomfort auf, weil das Flächengebilde im Verbundstoff die relative Luftfeuchtigkeit auf ein angenehmes Maß reguliert und übermäßiges Schwitzen verhindert. Gleichzeitig können die erfindungsgemäßen Verbundstoffe die aufgenommene Feuchtigkeit in Phasen der Nichtbenutzung optimal wieder abgeben und sich schnell regenerieren.

## Patentansprüche

1. Verfahren zur Herstellung eines Flächengebildes, das höchstens 30 mm dick ist, umfassend die Schritte
i) Bereitstellen eines offenzelligen Schaums,
ii) Aufbringen einer Mischung, die mindestens ein ethylenisch ungesättigtes,
mindestens eine Säuregruppe tragendes Monomer enthält, auf den
Schaum, und
iii) Polymerisation der Mischung zum Superabsorber.

2. Verfahren gemäß Anspruch 1, **dadurch gekennzeichnet, dass** das ethylenisch ungesättigte, mindestens eine Säuregruppe tragende Monomer teilneutralisierte Acrylsäure ist.

3. Verfahren nach Anspruch 2, **dadurch gekennzeichnet, dass** die Acrylsäure zu mindestens 25 Mol-% neutralisiert ist.

4. Flächengebilde erhältlich nach dem Verfahren gemäß mindestens einem der Ansprüche 1 bis 3.

5. Flächengebilde nach Anspruch 4, **dadurch gekennzeichnet, dass** es höchstens 15 mm dick ist.

6. Flächengebilde nach Anspruch 4, **dadurch gekennzeichnet, dass** es höchstens 5 mm dick ist.

7. Flächengebilde nach den Ansprüchen 4 bis 6, **dadurch gekennzeichnet, dass** der Schaum ein Polyurethan-, Polyester-, synthetischer oder natürlicher Latexschaum ist.

8. Flächengebilde nach den Ansprüchen 4 bis 7, **dadurch gekennzeichnet, dass** der Superabsorber ein vernetztes Polymer auf Basis teilneutralisierter Acrylsäure ist.

9. Verwendung eines Flächengebildes nach einem der Anspruche 4 bis 8 zur Feuchtigkeitsregulierung.

10. Verbundmaterial, umfassend mindestens ein Flächengebilde nach einem der Ansprüche 4 bis 8.

## Claims

1. A process for producing a sheet material which is not more than 30 mm in thickness, comprising the steps of
i) providing an open-cell foam,
ii) applying to the foam a mixture comprising at least one ethylenically unsaturated monomer bearing at least one acid group, and
iii) polymerizing the mixture to form the superabsorbent.

2. The process according to claim 1 wherein the ethylenically unsaturated monomer bearing at least one acid group is partially neutralized acrylic acid.

3. The process according to claim 2 wherein the acrylic acid is at least 25 mol% neutralized.

4. A sheet material obtainable by the process according to at least one of claims 1 to 3.

5. The sheet material according to claim 4 being not more than 15 mm in thickness.

6. The sheet material according to claim 4 being not more than 5 mm in thickness.

7. The sheet material according to claims 4 to 6 wherein the foam is a polyurethane, polyester, synthetic or natural latex foam.

8. The sheet material according to claims 4 to 7 wherein the superabsorbent is a crosslinked polymer based on partially neutralized acrylic acid.

9. The use of a sheet material according to any of claims 4 to 8 for moisture regulation.

10. A composite material comprising at least one sheet material according to any of claims 4 to 8.

## Revendications

1. Procédé de fabrication d'une structure plate, qui a une épaisseur d'au plus 30 mm, comprenant les étapes suivantes :
i) la préparation d'une mousse à cellules ouvertes,
ii) l'application d'un mélange qui contient au moins un monomère éthyléniquement insaturé portant au moins un groupe acide, sur la mousse, et
iii) la polymérisation du mélange en un superabsorbant.

2. Procédé selon la revendication 1, **caractérisé en ce que** le monomère éthyléniquement insaturé portant au moins un groupe acide est l'acide acrylique partiellement neutralisé.

3. Procédé selon la revendication 2, **caractérisé en ce que** l'acide acrylique est neutralisé à hauteur d'au moins 25 % en moles.

4. Structure plate pouvant être obtenue par le procédé selon au moins l'une quelconque des revendications 1 à 3.

5. Structure plate selon la revendication 4, **caractérisée en ce qu'**elle a une épaisseur d'au plus 15 mm.

6. Structure plate selon la revendication 4, **caractérisée en ce qu'**elle a une épaisseur d'au plus 5 mm.

7. Structure plate selon les revendications 4 à 6, **caractérisée en ce que** la mousse est une mousse de polyuréthane, de polyester, de latex synthétique ou naturelle.

8. Structure plate selon les revendications 4 à 7, **caractérisée en ce que** le superabsorbant est un polymère réticulé à base d'acide acrylique partiellement neutralisé.

9. Utilisation d'une structure plate selon l'une quelconque des revendications 4 à 8 pour la régulation de l'humidité.

10. Matériau composite, comprenant au moins une structure plate selon l'une quelconque des revendications 4 à 8.
